# EUROPÄISCHE PATENTSCHRIFT

(11) **EP 4 375 434 B1**
(45) Veröffentlichungstag und Bekanntmachung des Hinweises auf die Patenterteilung: **07.10.2026**
(21) Anmeldenummer: 23211471.0
(22) Anmeldetag: 22.11.2023
(51) Int. Cl.: E03D 9/08

(54) **REINIGUNGSVORRICHTUNG EINER NICHT-ELEKTRISCHEN TOILETTENABDECKUNG FÜR DEN MENSCHLICHEN KÖRPER**
CLEANING DEVICE OF A NON-ELECTRIC TOILET COVER FOR THE HUMAN BODY
DISPOSITIF DE NETTOYAGE D'UN COUVERCLE DE TOILETTE NON ÉLECTRIQUE POUR LE CORPS HUMAIN

(30) Priorität: 23.11.2022 CN 202223118916 U
(43) Veröffentlichungstag der Anmeldung: 29.05.2024
(73) Patentinhaber: Oceanwell (Xiamen) Industrial Co., Ltd., Xiamen, Fujian (CN)
(72) Erfinder: PENG, Dong, Dongfu Town Haicang Dist., Xiamen (CN); PAN, Ruixue, Dongfu Town Haicang Dist., Xiamen (CN); ZHANG, Yongnong, Dongfu Town Haicang Dist., Xiamen (CN)
(74) Vertreter: Rätsch, Caroline

(56) Entgegenhaltungen:
- WO-A1-85/01765
- CN-U- 207 364 515
- CN-U- 211 922 877
- KR-A- 20170 008 521

## Beschreibung

### Technisches Gebiet

Die Erfindung betrifft eine Reinigungsvorrichtung einer nicht-elektrischen Toilettenabdeckung für den menschlichen Körper.

### Stand der Technik

Die Funktionen intelligenter Toilettenabdeckungen sind reichhaltig und weisen Funktionen wie Reinigung des Gesäßes, Reinigung des weiblichen Intimbereichs, Trocknung, Erwärmung, Beleuchtung, Warmwasserquelle usw. auf. Bei einer nicht-elektrischen Toilettenabdeckung zur Reinigung des menschlichen Körpers sind wegen der nicht-elektrischen Ausführung meist lediglich die grundsätzlichen Funktionen wie die Reinigung des Gesäßes und die Reinigung des weiblichen Intimbereichs gewährleistet. Zwar sind die Funktionen einer nicht-elektrischen Toilettenabdeckung beschränkt, aber im Vergleich zu einer intelligenten Toilettenabdeckung sind die Kosten wesentlich geringer und eine Montage auf herkömmlichen Toiletten ist möglich. Daher kaufen zahlreiche Nutzer eine nicht-elektrische Toilettenabdeckung als Ersatz einer gewöhnlichen Abdeckung, um eine Reinigung des Gesäßes und eine Reinigung des weiblichen Intimbereichs zu ermöglichen. Der Nachteil besteht darin, dass für die Reinigung des Gesäßes und die Reinigung des weiblichen Intimbereichs lediglich kaltes Wasser oder Wasser mit Umgebungstemperatur genutzt werden kann, was zweifellos eine enorme Unzulänglichkeit der nicht-elektrischen Toilettenabdeckung bedeutet und die Verwendung einer nicht-elektrischen Toilettenabdeckung erheblich beschränkt.

Aus der WO 85/01765 und der CN 207 364 515 U ist eine Reinigungsvorrichtung mit den Merkmalen des Oberbegriffs des Anspruchs 1 bekannt. Aus der CN 211 922 877 U ist eine Reinigungsvorrichtung mit einem thermostatischem Steuerungsventil bekannt, die zusätzlich eine Erwärmung des WC-Sitzes ermöglicht.

### Erfindung

Die Erfindung schafft eine Reinigungsvorrichtung einer nicht-elektrischen Toilettenabdeckung für den menschlichen Körper, die die Nachteile des Standes der Technik überwindet. Erfindungsgemäß wird eine Reinigungsvorrichtung einer nicht-elektrischen Toilettenabdeckung für den menschlichen Körper vorgeschlagen, die eine Basis, eine stabförmige Spritzeinheit und eine der Wasserversorgung der stabförmigen Spritzeinheit dienende Wasserversorgungsleitung umfasst, wobei die stabförmige Spritzeinheit mit der Basis verbunden ist, wobei ferner ein an der Wasserversorgungsleitung vorgesehenes thermostatisches Steuerungsventil sowie eine Temperatureinstelleinrichtung zur manuellen Betätigung des thermostatischen Steuerungsventils umfasst sind, wobei die Wasserversorgungsleitung in eine Wasserzulauf-Leitung und eine Wasserablauf-Leitung unterteilt ist und das thermostatische Steuerungsventil eine Schnittstelle bildet, wobei die Wasserzulauf-Leitung in zwei Leitungen unterteilt ist, an deren Anfang jeweils ein Anschluss vorgesehen ist, wobei durch die beiden Wasserzulauf-Leitungen jeweils kaltes Wasser und heißes Wasser in das thermostatische Steuerungsventil einströmt, um warmes Wasser zu mischen, wobei das gemischte warme Wasser durch die Wasserablauf-Leitung in die stabförmige Spritzeinheit einströmen kann, wobei sich das äußere Ende der Temperatureinstelleinrichtung über den Seitenrand der Basis hinauserstreckt, und wobei die Temperatureinstelleinrichtung eine durchgehende Stange oder eine Verbindung mehrerer Stangen oder mehrere verbundene Stangen aufweist, bei welchen die Enden zweier benachbarter Stangen durch Zahnradübertragung gekoppelt sind.

Zwar handelt es sich um eine nicht-elektrische Toilettenabdeckung, es ist jedoch an der Wasserversorgungsleitung ein thermostatisches Steuerungsventil vorgesehen, wobei eine Wasserzulauf-Leitung mit einem Kaltwasserohr (oder einem gewöhnlichen Innenraumwasserrohr) verbunden sein kann, während die andere Wasserzulauf-Leitung mit einer Warmwasserleitung einer Wassererhitzungsvorrichtung verbunden sein kann. Dies bedeutet, dass die Reinigungsvorrichtung einer nicht-elektrischen Toilettenabdeckung für den menschlichen Körper mit einer Wassererhitzungsvorrichtung eines Sanitärraums verbunden sein kann, wobei das von der Wassererhitzungsvorrichtung erhaltene heiße Wasser in dem thermostatischen Steuerungsventil mit kaltem Wasser gemischt wird, so dass warmes Wasser erhalten wird und die stabförmige Spritzeinheit warmes Wasser zur Reinigung des Gesäßes und zur Reinigung des weiblichen Intimbereichs ausspritzen kann. Hierdurch werden die Nachteile einer nicht-elektrischen Toilettenabdeckung nach dem Stand der Technik, bei der kein warmes Wasser bereitgestellt werden kann, überwunden.

Erfindungsgemäß umfasst der Anschluss einen Wassereinlasskörper und eine Wasserauslass-Abdeckung, die drehbar miteinander verbunden sind, wobei zwischen dem Wassereinlasskörper und der Wasserauslass-Abdeckung ein Dichtungsring angeordnet ist, und wobei durch ein Drehen des Wassereinlasskörpers eine Ausrichtung der Anschlussöffnung erfolgt. Der Wassereinlasskörper ist drehbar, die Betätigung ist sehr komfortabel und die Konstruktion ist einfach.

Bei einer vorteilhaften Ausführungsform ist an dem äußeren Ende der Temperatureinstelleinrichtung ein Drehknopf vorgesehen.

Bei einer vorteilhaften Ausführungsform ist vorgesehen, dass die Anschlussöffnung des Anschlusses von der Basis aus zur Seite hin oder auf die Unterseite der Basis weist. Dies gestattet eine Anpassung an die Position der Toilette und die tatsächliche Position des Wasserquellenanschlusses in dem Sanitärraum, was die Anbringung und die Benutzung vereinfacht.

Bei einer vorteilhaften Ausführungsform ist vorgesehen, dass der Wassereinlasskörper L-förmig ausgebildet ist, was eine komfortable Einstellung der Ausrichtung der Anschlussöffnung des Anschlusses ermöglicht.

Bei einer vorteilhaften beispielhaften Ausführungsform ist vorgesehen, dass die Basis eine Aussparung aufweist, die mit dem Wassereinlasskörper korrespondiert. Wenn die Anschlussöffnung nach unten weist, wird durch die Aussparung Platz für den Wassereinlasskörper geschaffen, so dass der Anschluss als Ganzes verborgen ist.

Bei einer vorteilhaften Ausführungsform ist vorgesehen, dass der Anschluss ferner einen Klemmverschluss umfasst, der in den Wassereinlasskörper und die Wasserauslass-Abdeckung eingesteckt ist. Somit besteht eine sichere Verbindung zwischen dem Wassereinlasskörper und der Wasserauslass-Abdeckung.

Bei einer vorteilhaften beispielhaften Ausführungsform ist vorgesehen, dass der Klemmverschluss zwei Stecker und ein die beiden Stecker verbindendes Verbindungsstück aufweist, wobei an der Unterseite des Verbindungsstücks ein Zentrierstift vorgesehen ist, wobei in der Wasserauslass-Abdeckung dem Zentrierstift und den Steckern jeweils zugeordnete Stecköffnungen vorgesehen sind, und wobei in der Außenwand des Wassereinlasskörpers eine den Steckern zugeordnete Nut vorgesehen ist.

Bei einer vorteilhaften beispielhaften Ausführungsform ist an der Wasserablauf-Leitung eine Luftunterbrechung vorgesehen. Damit kann verhindert werden, dass innerhalb der stabförmigen Spritzeinheit befindliches Wasser zurückströmt und die Wasserquelle verunreinigt.

Vorzugsweise ist auf der Oberseite der Basis ein Wasserkanal vorgesehen, wobei sich oberhalb eines Endes des Wasserkanals eine Überlauföffnung der Luftunterbrechung befindet, während sich das andere Ende des Wasserkanals bis zu dem Rand des auf den Nutzer weisenden Endes der Basis erstreckt, und wobei an dem anderen Ende des Wasserkanals ein Wasserauslass angeordnet ist. Zurückströmendes Wasser entweicht durch den Wasserauslass des anderen Endes des Wasserkanals und kann unmittelbar in die Toilettenschüssel gelangen.

### Figurenbeschreibung

Im Folgenden wird die Erfindung anhand von einem Ausführungsbeispiel im Zusammenhang mit den Figuren beschrieben.
Figur 1 zeigt eine dreidimensionale Ansicht der Reinigungsvorrichtung einer nicht-elektrischen Toilettenabdeckung für den menschlichen Körper.
Figur 2 zeigt eine Ansicht eines thermostatischen Steuerungsventils und der Temperatureinstelleinrichtung.
Figur 3 zeigt eine Explosionsansicht des Anschlusses.
Figur 4 zeigt eine Schnittansicht des Anschlusses.
Figur 5 zeigt eine weitere Schnittansicht des Anschlusses.
Figur 6 zeigt eine Explosionsansicht der Basis und der Luftunterbrechung.

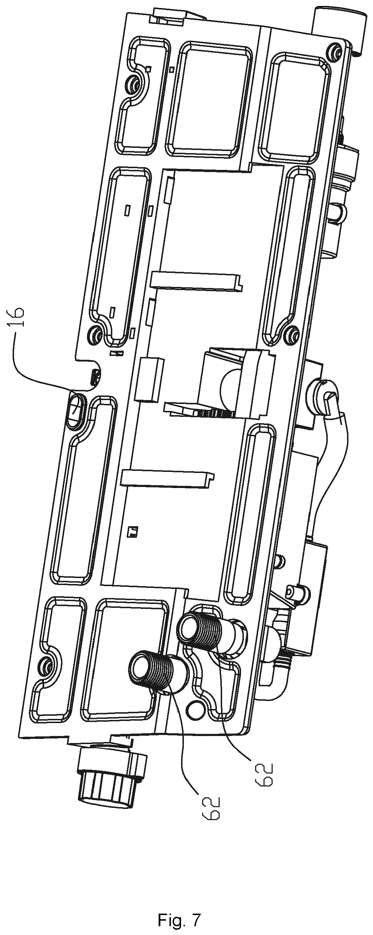

Figur 7 zeigt eine Ansicht der auf die Unterseite der Basis weisenden Anschlussöffnung des Anschlusses.

### Ausführungsbeispiel

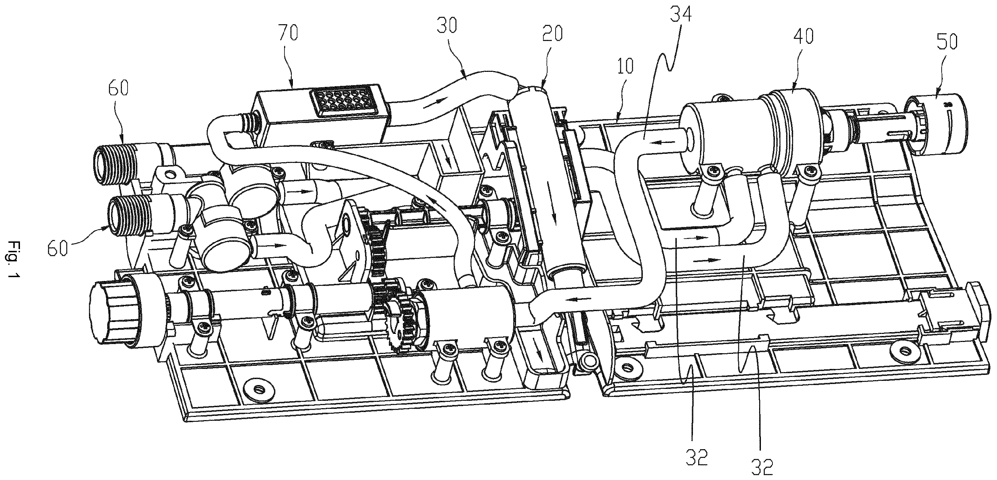

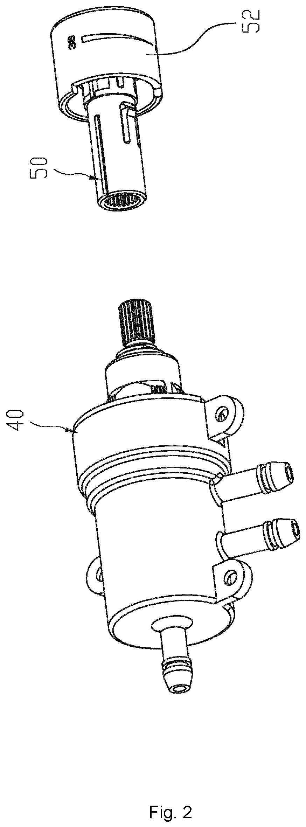

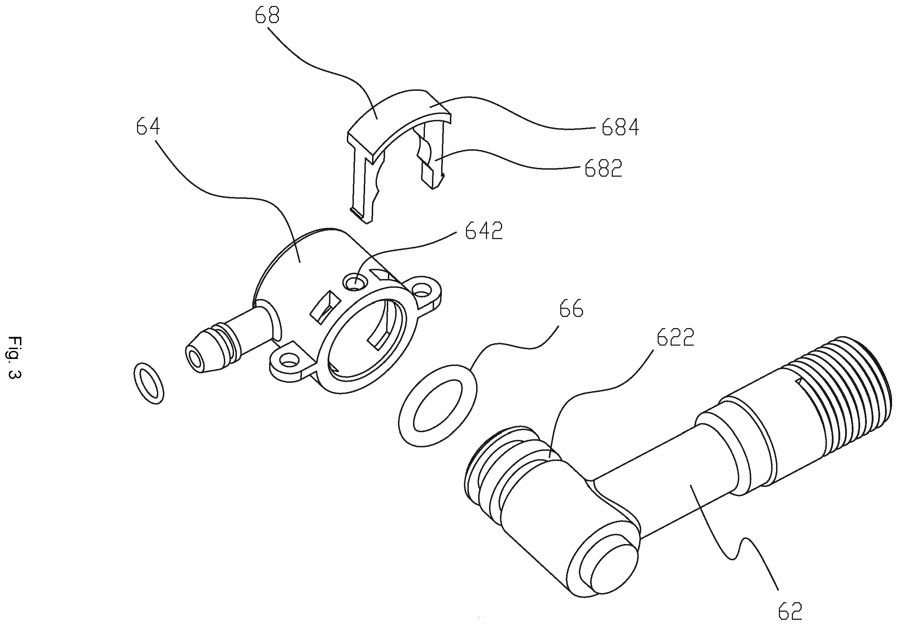

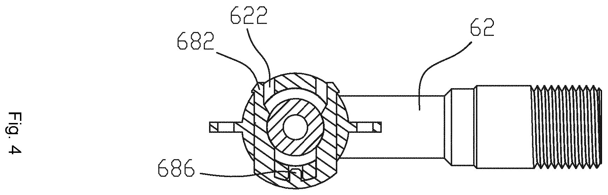

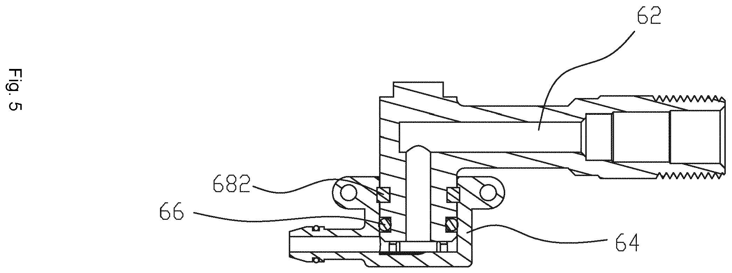

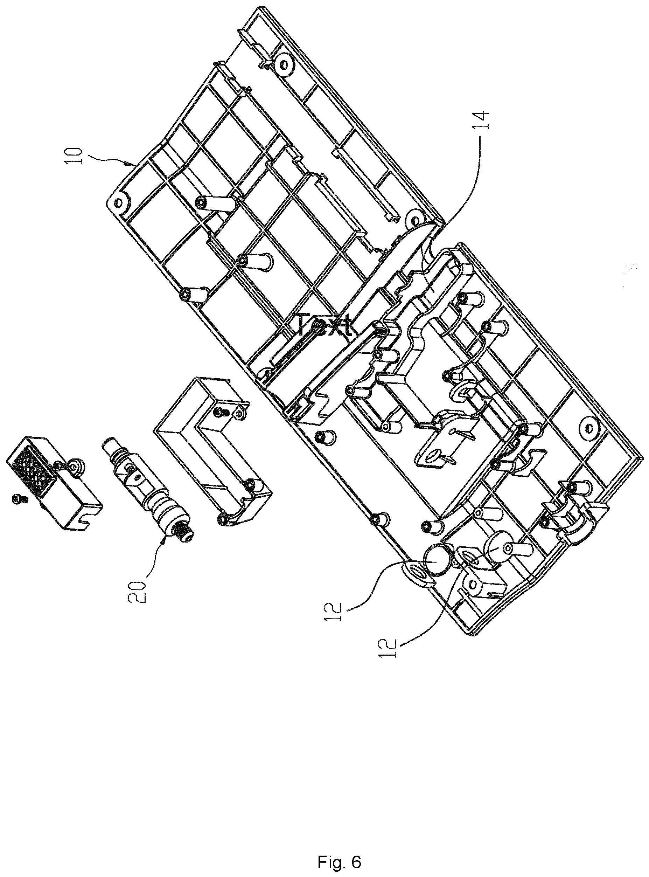

Wie in Figur 1 bis Figur 6 gezeigt handelt es sich um eine Reinigungsvorrichtung einer nicht-elektrischen Toilettenabdeckung für den menschlichen Körper, umfassend eine Basis 10, eine stabförmige Spritzeinheit 20 und eine der Wasserversorgung der stabförmigen Spritzeinheit dienende Wasserversorgungsleitung 30, wobei die stabförmige Spritzeinheit 20 mit der Basis 10 verbunden ist. Die Reinigungsvorrichtung weist ferner ein an der Wasserversorgungsleitung 30 vorgesehenes thermostatisches Steuerungsventil 40 sowie eine Temperatureinstelleinrichtung 50 zur manuellen Betätigung des thermostatischen Steuerungsventils auf, wobei das thermostatische Steuerungsventil dazu dient, die Temperatur des ausgegebenen Wassers konstant zu halten. Die Konstruktion und das Prinzip des thermostatischen Steuerungsventils gehören zum Stand der Technik. Die Wasserversorgungsleitung 30 ist in eine Wasserzulauf-Leitung 32 und eine Wasserablauf-Leitung 34 unterteilt, wobei das thermostatische Steuerungsventil 40 eine Schnittstelle bildet. Die Wasserzulauf-Leitung 32 ist in zwei Leitungen unterteilt, wobei am Anfang jeweils ein Anschluss 60 vorgesehen ist. Durch die beiden Wasserzulauf-Leitungen 32 strömt kaltes Wasser (nämlich Wasser mit Umgebungstemperatur) bzw. heißes Wasser (z.B. durch einen Wassererhitzer in einem Badezimmer erhitztes Wasser) jeweils in das thermostatische Steuerungsventil 40, um warmes Wasser zu mischen, wobei das gemischte warme Wasser durch die Wasserablauf-Leitung 34 in die stabförmige Spritzeinheit 20 einströmen kann, so dass die stabförmige Spritzeinheit warmes Wasser ausgeben kann. Das äußere Ende der Temperatureinstelleinrichtung 50 erstreckt sich über den Seitenrand der Basis 10 hinaus. Die Temperatureinstelleinrichtung 50 weist eine durchgehende Stange oder eine Verbindung mehrerer Stangen oder mehrere verbundene Stangen auf, bei welchen die Enden zweier benachbarter Stangen durch Zahnradübertragung gekoppelt sind. In diesem Zusammenhang ist es lediglich erforderlich, dass das thermostatische Steuerungsventil betätigt werden kann, um es einzustellen.

Weil die beiden Wasserzulauf-Leitungen 32 jeweils mit einem Wasserweg mit Umgebungstemperatur und einem Wasserweg mit heißem Wasser verbunden sind und insbesondere weil der Wasserweg mit heißem Wasser von außerhalb der Abdeckung beispielsweise durch einen Wassererhitzer eines Badezimmers versorgt wird, ist innerhalb der Abdeckung keine Batterie erforderlich, um aus der stabförmigen Spritzeinheit warmes Wasser zu spritzen.

Vorteilhaft ist vorgesehen, dass an dem äußeren Ende der Temperatureinstelleinrichtung 50 ein Drehknopf 52 angeordnet ist, was einerseits eine komfortable Betätigung und andererseits eine Temperaturanzeige ermöglicht.

Vorzugsweise weist die Anschlussöffnung des Anschlusses 60 von der Basis 10 aus zur Seite hin oder auf die Unterseite der Basis, so dass der Anschluss passend zu der zugehörigen Verbindungsstelle angeschlossen werden kann, um verschiedenen Einbausituationen gerecht zu werden.

Erfindungsgemäß umfasst der Anschluss 60 einen Wassereinlasskörper 62 und eine Wasserauslass-Abdeckung 64, die drehbar miteinander verbunden sind, wobei zwischen dem Wassereinlasskörper 62 und der Wasserauslass-Abdeckung 64 ein Dichtungsring 66 angeordnet ist, und wobei durch ein Drehen des Wassereinlasskörpers eine Ausrichtung der Anschlussöffnung erfolgt. Der Wassereinlasskörper 62 ist vorzugsweise L-förmig ausgebildet. Bei der vorliegenden Ausführungsform ist vorgesehen, dass die Basis 10 eine Aussparung 12 aufweist, die mit dem Wassereinlasskörper korrespondiert, so dass dann, wenn die Anschlussöffnung des Anschlusses 60 auf die Unterseite der Basis weist, der Wassereinlasskörper durch die Aussparung 12 gehen kann.

Vorteilhaft ist vorgesehen, dass der Anschluss 60 ferner einen Klemmverschluss 68 umfasst, der in den Wassereinlasskörper 62 und die Wasserauslass-Abdeckung 64 eingesteckt ist, um zwischen beiden Bauteilen eine stabilere Verbindung herzustellen.

Vorzugsweise weist der Klemmverschluss 68 zwei Stecker 682 und ein die beiden Stecker verbindendes Verbindungsstück 684 auf, wobei auf der Unterseite des Verbindungsstücks ein Zentrierstift 686 vorgesehen ist, wobei in der Wasserauslass-Abdeckung 64 dem Zentrierstift und den Steckern jeweils zugeordnete Stecköffnungen 642 ausgebildet sind, und wobei in der Außenwand des Wassereinlasskörpers 62 eine den Steckern zugeordnete Nut 622 vorgesehen ist. Nach der erfolgten Montage ist der Zentrierstift 686 in die Stecköffnung 642 eingesteckt und die beiden Stecker 682 sind durch die Stecköffnungen in die Nut 622 eingesteckt.

Vorteilhaft ist ferner an der Wasserablauf-Leitung eine Luftunterbrechung 70 umfasst. Die Luftunterbrechung dient der Verhinderung des Rückflusses von Wasser, verhindert also, dass in der stabförmigen Spritzeinheit 20 befindliches Wasser zu dem thermostatischen Steuerungsventil 40 zurückströmt. Die Konstruktion der Luftunterbrechung 70 gehört zum Stand der Technik, so dass eine detaillierte Beschreibung an dieser Stelle entfällt.

Vorteilhaft ist auf der Oberseite der Basis 10 ein Wasserkanal 14 vorgesehen, wobei sich eine Überlauföffnung der Luftunterbrechung 70 oberhalb eines Endes des Wasserkanals 14 befindet, während sich das andere Ende des Wasserkanals bis zu dem Rand des auf den Nutzer weisenden Endes der Basis erstreckt, und wobei an dem anderen Ende des Wasserkanals 14 ein Wasserauslass 16 angeordnet ist. Dadurch kann im Falle eines Rückströmens von Wasser das aus der Luftunterbrechung 70 überlaufende Wasser in den Wasserkanal gelangen, um anschließend durch den Wasserauslass 16 in die Toilette zu fließen.

Vorstehend wurden lediglich vorteilhafte Ausführungsbeispiele der Erfindung beschrieben, ohne dass diese eine Beschränkung des Umfangs der Erfindung bedeuten.

## Patentansprüche

1. Reinigungsvorrichtung einer nicht-elektrischen Toilettenabdeckung für den menschlichen Körper, umfassend eine Basis (10), eine stabförmige Spritzeinheit (20) und eine der Wasserversorgung der stabförmigen Spritzeinheit (20) dienende Wasserversorgungsleitung (30), wobei die stabförmige Spritzeinheit (20) mit der Basis (10) verbunden ist, wobei ferner ein an der Wasserversorgungsleitung (30) vorgesehenes thermostatisches Steuerungsventil (40) sowie eine Temperatureinstelleinrichtung (50) zur manuellen Betätigung des thermostatischen Steuerungsventils (40) umfasst sind, wobei die Wasserversorgungsleitung (30) in eine Wasserzulauf-Leitung (32) und eine Wasserablauf-Leitung (34) unterteilt ist und das thermostatische Steuerungsventil (40) eine Schnittstelle bildet, wobei die Wasserzulauf-Leitung (32) in zwei Leitungen unterteilt ist, an deren Anfang jeweils ein Anschluss (60) vorgesehen ist, wobei durch die beiden Wasserzulauf-Leitungen (32) jeweils kaltes Wasser und heißes Wasser in das thermostatische Steuerungsventil (40) einströmt, um warmes Wasser zu mischen, wobei das gemischte warme Wasser durch die Wasserablauf-Leitung (34) in die stabförmige Spritzeinheit (20) einströmen kann, wobei sich das äußere Ende der Temperatureinstelleinrichtung (50) über den Seitenrand der Basis (10) hinauserstreckt, und wobei die Temperatureinstelleinrichtung (50) eine durchgehende Stange oder eine Verbindung mehrerer Stangen oder mehrere verbundene Stangen aufweist, bei welchen die Enden zweier benachbarter Stangen durch Zahnradübertragung gekoppelt sind, **dadurch gekennzeichnet, dass** der Anschluss (60) einen Wassereinlasskörper (62) und eine Wasserauslass-Abdeckung (64) umfasst, die drehbar miteinander verbunden sind, wobei zwischen dem Wassereinlasskörper (62) und der Wasserauslass-Abdeckung (64) ein Dichtungsring (66) angeordnet ist, und wobei durch ein Drehen des Wassereinlasskörpers (62) eine Ausrichtung der Anschlussöffnung des Anschlusses erfolgt.

2. Reinigungsvorrichtung einer nicht-elektrischen Toilettenabdeckung für den menschlichen Körper nach Anspruch 1, **dadurch gekennzeichnet, dass** an dem äußeren Ende der Temperatureinstelleinrichtung (50) ein Drehknopf (52) vorgesehen ist.

3. Reinigungsvorrichtung einer nicht-elektrischen Toilettenabdeckung für den menschlichen Körper nach Anspruch 1 oder 2, **dadurch gekennzeichnet, dass** die Anschlussöffnung des Anschlusses (60) von der Basis (10) aus zur Seite hin oder auf die Unterseite der Basis (10) weist.

4. Reinigungsvorrichtung einer nicht-elektrischen Toilettenabdeckung für den menschlichen Körper nach Anspruch 3, **dadurch gekennzeichnet, dass** der Wassereinlasskörper (62) L-förmig ausgebildet ist.

5. Reinigungsvorrichtung einer nicht-elektrischen Toilettenabdeckung für den menschlichen Körper nach Anspruch 4, **dadurch gekennzeichnet, dass** die Basis (10) eine Aussparung (12) aufweist, die mit dem Wassereinlasskörper (62) korrespondiert.

6. Reinigungsvorrichtung einer nicht-elektrischen Toilettenabdeckung für den menschlichen Körper nach Anspruch 1, **dadurch gekennzeichnet, dass** der Anschluss (60) ferner einen Klemmverschluss (68) umfasst, der in den Wassereinlasskörper (62) und die Wasserauslass-Abdeckung (64) eingesteckt ist.

7. Reinigungsvorrichtung einer nicht-elektrischen Toilettenabdeckung für den menschlichen Körper nach Anspruch 6, **dadurch gekennzeichnet, dass** der Klemmverschluss (68) zwei Stecker (682) und ein die beiden Stecker (682) verbindendes Verbindungsstück (684) aufweist, wobei an der Unterseite des Verbindungsstücks (684) ein Zentrierstift (686) vorgesehen ist, wobei in der Wasserauslass-Abdeckung (64) dem Zentrierstift (686) und den Steckern (682) jeweils zugeordnete Stecköffnungen (642) vorgesehen sind, und wobei in der Außenwand des Wassereinlasskörpers (62) eine den Steckern (682) zugeordnete Nut (622) vorgesehen ist.

8. Reinigungsvorrichtung einer nicht-elektrischen Toilettenabdeckung für den menschlichen Körper nach Anspruch 1 oder 2, **dadurch gekennzeichnet, dass** ferner an der Wasserablauf-Leitung (34) eine Luftunterbrechung (70) umfasst ist.

9. Reinigungsvorrichtung einer nicht-elektrischen Toilettenabdeckung für den menschlichen Körper nach Anspruch 8, **dadurch gekennzeichnet, dass** auf der Oberseite der Basis (10) ein Wasserkanal (14) vorgesehen ist, wobei sich oberhalb eines Endes des Wasserkanals (14) eine Überlauföffnung der Luftunterbrechung (70) befindet, während sich ein anderes Ende des Wasserkanals (14) bis zu dem Rand des auf den Nutzer weisenden Endes der Basis erstreckt, und wobei an dem anderen Ende des Wasserkanals (14) ein Wasserauslass (16) angeordnet ist.

## Claims

1. Cleaning device of a non-electric toilet cover for the human body, comprising a base (10), a rod-shaped spraying unit (20) and a water supply line (30) serving to supply water to the rod-shaped spraying unit (20), wherein the rod-shaped spraying unit (20) is connected to the base (10), wherein, furthermore, a thermostatic control valve (40) provided on the water supply line (30) and a temperature setting device (50) for manual actuation of the thermostatic control valve (40) are included, wherein the water supply line (30) is divided into a water inlet line (32) and a water outlet line (34), and the thermostatic control valve (40) forms an interface, wherein the water inlet line (32) is divided into two lines, at the beginning of which a connection (60) is provided in each case, wherein cold water and hot water in each case flow through the two water inlet lines (32) into the thermostatic control valve (40) in order to mix warm water, wherein the mixed warm water can flow through the water outlet line (34) into the rod-shaped spraying unit (20), wherein the outer end of the temperature setting device (50) extends beyond the side edge of the base (10), and wherein the temperature setting device (50) has a continuous rod or a connection of a plurality of rods or a plurality of connected rods, in which the ends of two adjacent rods are coupled by gearwheel transmission, **characterized in that** the connection (60) comprises a water inlet body (62) and a water outlet cover (64), which are rotatably connected to one another, wherein a sealing ring (66) is arranged between the water inlet body (62) and the water outlet cover (64), and wherein an orientation of the connection opening of the connection takes place by a rotation of the water inlet body (62).

2. Cleaning device of a non-electric toilet cover for the human body according to Claim 1, **characterized in that** a rotary knob (52) is provided at the outer end of the temperature setting device (50).

3. Cleaning device of a non-electric toilet cover for the human body according to Claim 1 or 2, **characterized in that** the connection opening of the connection (60) points from the base (10) towards the side or at the underside of the base (10).

4. Cleaning device of a non-electric toilet cover for the human body according to Claim 3, **characterized in that** the water inlet body (62) is of L-shaped form.

5. Cleaning device of a non-electric toilet cover for the human body according to Claim 4, **characterized in that** the base (10) has a cut-out (12) which corresponds with the water inlet body (62).

6. Cleaning device of a non-electric toilet cover for the human body according to Claim 1, **characterized in that** the connection (60) comprises, furthermore, a clamping fastener (68) which is plugged into the water inlet body (62) and the water outlet cover (64).

7. Cleaning device of a non-electric toilet cover for the human body according to Claim 6, **characterized in that** the clamping fastener (68) has two plugs (682) and a connecting piece (684) connecting the two plugs (682), wherein a centring pin (686) is provided on the underside of the connecting piece (684), wherein plug openings (642) respectively assigned to the centring pin (686) and the plugs (682) are provided in the water outlet cover (64), and wherein a groove (622) which is assigned to the plugs (682) is provided in the outer wall of the water inlet body (62).

8. Cleaning device of a non-electric toilet cover for the human body according to Claim 1 or 2, **characterized in that** an air break (70) is included, furthermore, on the water outlet line (34).

9. Cleaning device of a non-electric toilet cover for the human body according to Claim 8, **characterized in that** a water channel (14) is provided on the upper side of the base (10), wherein an overflow opening of the air break (70) is situated above one end of the water channel (14), while another end of the water channel (14) extends as far as the edge of the end of the base facing the user, and wherein a water outlet (16) is arranged at the other end of the water channel (14).

## Revendications

1. Couvercle de toilette pour le corps humain, comprenant une base (10), une unité de pulvérisation en forme de tige (20) et une conduite d'alimentation en eau (30) servant à l'alimentation en eau de l'unité de pulvérisation en forme de tige (20), l'unité de pulvérisation en forme de tige (20) étant reliée à la base (10), comprenant en outre une vanne de commande thermostatique (40) prévue sur la conduite d'alimentation en eau (30) ainsi qu'un dispositif de réglage de la température (50) destiné à l'actionnement manuel de la vanne de commande thermostatique (40), la conduite d'alimentation en eau (30) étant divisée en une conduite d'arrivée d'eau (32) et une conduite d'évacuation d'eau (34), la vanne de commande thermostatique (40) formant une interface, la conduite d'arrivée d'eau (32) étant divisée en deux conduites, au commencement de chacune desquelles est prévu un raccord (60), de l'eau froide et de l'eau chaude s'écoulant respectivement par les deux conduites d'arrivée d'eau (32) dans la vanne de commande thermostatique (40) afin de mélanger de l'eau chaude, l'eau chaude mélangée pouvant s'écouler par la conduite d'évacuation d'eau (34) dans l'unité de pulvérisation en forme de tige (20), l'extrémité extérieure du dispositif de réglage de la température (50) s'étendant au-delà du bord latéral de la base (10), et le dispositif de réglage de la température (50) présentant une barre continue ou un assemblage de plusieurs barres ou plusieurs barres reliées, les extrémités de deux barres adjacentes étant couplées par une transmission à engrenages, **caractérisé en ce que** le raccord (60) comprend un corps d'entrée d'eau (62) et un couvercle de sortie d'eau (64), reliés l'un à l'autre de manière rotative, un anneau d'étanchéité (66) étant disposé entre le corps d'entrée d'eau (62) et le couvercle de sortie d'eau (64), et une orientation de l'ouverture de raccordement du raccord étant effectuée par une rotation du corps d'entrée d'eau (62).

2. Dispositif de nettoyage d'un couvercle de toilette non électrique pour le corps humain selon la revendication 1, **caractérisé en ce qu'**un bouton rotatif (52) est prévu à l'extrémité extérieure du dispositif de réglage de la température (50).

3. Dispositif de nettoyage d'un couvercle de toilette non électrique pour le corps humain selon la revendication 1 ou 2, **caractérisé en ce que** l'ouverture de raccordement du raccord (60) est orientée vers le côté à partir de la base (10) ou vers le côté inférieur de la base (10).

4. Dispositif de nettoyage d'un couvercle de toilette non électrique pour le corps humain selon la revendication 3, **caractérisé en ce que** le corps d'entrée d'eau (62) est réalisé en forme de L.

5. Dispositif de nettoyage d'un couvercle de toilette pour le corps humain selon la revendication 4, **caractérisé en ce que** la base (10) présente un évidement (12) qui correspond au corps d'entrée d'eau (62).

6. Dispositif de nettoyage d'un couvercle de toilette non électrique pour le corps humain selon la revendication 1, **caractérisé en ce que** le raccord (60) comprend en outre une fermeture à serrage (68), qui est insérée dans le corps d'entrée d'eau (62) et le couvercle de sortie d'eau (64).

7. Dispositif de nettoyage d'un couvercle de toilette non électrique pour le corps humain selon la revendication 6, **caractérisé en ce que** la fermeture à serrage (68) présente deux fiches (682) et une pièce de liaison (684) reliant les deux fiches (682), un pion de centrage (686) étant prévu sur le côté inférieur de la pièce de liaison (684), des ouvertures d'insertion (642) respectivement associées au pion de centrage (686) et aux fiches (682) étant prévues dans le couvercle de sortie d'eau (64), et une rainure (622) associée aux fiches (682) étant prévue dans la paroi extérieure du corps d'entrée d'eau (62).

8. Dispositif de nettoyage d'un couvercle de toilette non électrique pour le corps humain selon la revendication 1 ou 2, **caractérisé en ce qu'**une rupture d'air (70) est en outre comprise sur la conduite d'évacuation d'eau (34).

9. Dispositif de nettoyage d'un couvercle de toilette non électrique pour le corps humain selon la revendication 8, **caractérisé en ce qu'**un canal d'eau (14) est prévu sur le côté supérieur de la base (10), une ouverture de trop-plein de la rupture d'air (70) étant située au-dessus d'une extrémité du canal d'eau (14), tandis qu'une autre extrémité du canal d'eau (14) s'étend jusqu'au bord de l'extrémité de la base orientée vers l'utilisateur, et une sortie d'eau (16) étant disposée à l'autre extrémité du canal d'eau (14).
